(19) Europäisches Patentamt
European Patent Office
Office européen des brevets

(11) **EP 1 995 519 B1**

(12) **EUROPEAN PATENT SPECIFICATION**

(45) Date of publication and mention
of the grant of the patent:
**08.04.2020 Bulletin 2020/15**

(51) Int Cl.:
**F23N 3/00** *(2006.01)*     **F23N 5/00** *(2006.01)*

(21) Application number: **08156638.2**

(22) Date of filing: **21.05.2008**

(54) **Method for controlling the pressure dynamics and for estimating the life cycle of the combustion chamber of a gas turbine**

Verfahren zur Steuerung der Druckdynamik und zur Einschätzung des Lebenszyklus der Verbrennungskammer einer Gasturbine

Procédé de régulation de la dynamique de pression et d'estimation de la durée de vie de la chambre de combustion d'une turbine à gaz

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **23.05.2007 IT MI20071048**

(43) Date of publication of application:
**26.11.2008 Bulletin 2008/48**

(73) Proprietor: **Nuovo Pignone S.p.A.**
**50127 Florence (IT)**

(72) Inventor: **Asti, Antonio**
**50127, Florence (IT)**

(74) Representative: **BRP Renaud & Partner mbB**
**Rechtsanwälte Patentanwälte**
**Steuerberater**
**Königstraße 28**
**70173 Stuttgart (DE)**

(56) References cited:
**WO-A1-2006/082210     US-A1- 2004 123 653**
**US-A1- 2005 273 277     US-A1- 2006 266 045**

- **J. Keisler, O. K. Chopra, W. J. Shack: "Fatigue Strain-Life Behavior of Carbon and Low-Alloy Steels, Austenitic Stainless Steels, and Alloy 600 in LWR Environments", Argonne National Laboratory , vol. NUREG/CR-6335 2 August 1995 (1995-08-02), pages FP-7, XP002770109, Retrieved from the Internet: URL:http://www.iaea.org/inis/collection/NC LCollectionStore/_Public/27/004/27004400.p df [retrieved on 2017-05-04]**
- **W. Beith, K.-H. Grote: "Dubbel Taschenbuch für den Maschinenbau", 1997, Springer ISBN: 3-540-62467-8 vol. 19th ed. * Chapter "E - Werkstofftechnik" Section "Rechnerische Lebendauervorhersage"; page E20 - page E21 ***

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

FIELD OF THE INVENTION

The present invention relates to a method for controlling the pressure dynamics and estimating the life cycle of the combustion chamber of a gas turbine.

DESCRIPTION OF THE RELATED ART

The use of gas turbines, normally consisting of a multiphase compressor, in which the air sucked from the outside is compressed, a combustion chamber, in which the combustion takes place of gaseous fuel added to the compressed air, and a turbine or expander, in which the gases coming from the combustion chamber are expanded, is known for the production of electric energy. The turbine is then capable of generating mechanical energy which can be exploited for activating operating machines or for feeding electric generators.
US 2004/123653 A1 discloses an ion sensor positioned in the combustion chamber of a turbine combustion system so that the ion sensor is exposed to gases containing free ions that are produced during combustion.
US 2006/266045 A1 discloses a process for protection of a gas turbine from damage caused by pressure pulsations in which pressure pulsations occurring during operation of the gas turbine are measured and a frequency band of a pulsation frequency signal is monitored.
Current methods for controlling the pressure dynamics of the combustion chamber of a gas turbine envisage that a certain protection action only be exerted after stress, having a specific level of amplitude, has been verified for a certain period of time. Furthermore, only a limited number of critical amplitudes is taken into consideration, whereas the periods of time are established on the basis of estimations based on experience.
The result obtained is that the action aimed at protecting the integrity of the combustion chamber and consequently of the turbine, is only exerted beyond a certain fatigue threshold, whereas the fatigue life cycle of the components of the turbine itself can also terminate below this threshold. As is known, fatigue is a mechanical phenomenon whereby a material subjected to varying loads with time, either regularly or casually, is damaged to breakage, even if the maximum intensity of the loads in question is much lower than that of breakage or static yield of the material itself.
An objective of the present invention is therefore to provide a method for controlling the pressure dynamics and for estimating the life cycle of the combustion chamber of a gas turbine, capable of establishing, on the basis of measurements of the pressure oscillations and using particular control and evaluation instruments, the admissible fatigue threshold for the same combustion chamber, allowing the due protection actions to be undertaken when excessive increases in pressure arise.
A further objective of the invention is to provide a method for controlling the pressure dynamics and for estimating the life cycle of the combustion chamber of a gas turbine, in which it is possible, on the basis of the data obtained, to optimize the maintenance intervals on the components of the combustion chamber itself.

BRIEF SUMMARY OF THE INVENTION

The present invention is defined in the accompanying claim 1. Examples of the present invention provide a method for controlling the pressure dynamics and for estimating the life cycle of the combustion chamber of a gas turbine.
Further characteristics of the invention are indicated in the subsequent claim.

BRIEF DESCRIPTION OF THE DRAWINGS

The characteristics and advantages of a method for controlling the pressure dynamics and for estimating the life cycle of the combustion chamber of a gas turbine according to the present invention will appear more evident from the following illustrative and non-limiting description, referring to the enclosed schematic drawings in which:

figure 1 is a schematic illustration of a gas turbine in which it is possible to apply a method for controlling the pressure dynamics and for estimating the life cycle of the combustion chamber according to the present invention;
figure 2 shows a diagram which relates a certain number of stress cycles measured with certain amplitude values; and
figure 3 shows a comparison between the values of figure 2 and the function obtained by approximating these values by means of an exponential regression.

DETAILED DESCRIPTION OF THE PREFERRED EMBODIMENTS

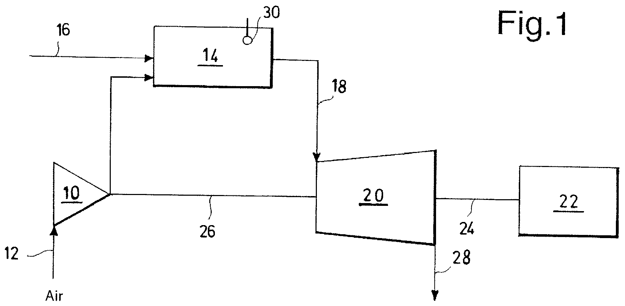

With reference in particular to figure 1, this schematically shows a generic gas turbine, comprising a compressor 10 capable of compressing air introduced through an inlet duct 12. The compressed air is then sent to a combustion chamber 14 to be mixed with gaseous fuel coming from a supply duct 16. The combustion increases the temperature, the rate and volume of the gas flow and consequently of the energy contained therein. This gas flow is directed, through a duct 18, towards a turbine 20, which transforms the gas energy into work energy which can be exploited for activating operating machines, such as for example a generator 22 connected to the turbine 20 by means of a shaft 24. The turbine 20 also supplies the energy necessary for activating the compressor 10 through the relative shaft 26, whereas the exhaust gases are expelled by the turbine 20 through an outlet duct 28.

The method for controlling the pressure dynamics and for estimating the life cycle of the combustion chamber 14 according to the present invention envisages the correlation between the stress amplitudes, due to the increases in pressure which take place inside the combustion chamber 14 itself, and the persistence times (cycles) of said stress through the well-known Wohler curve.

The Wohler curve is a graph on a statistic basis which relates the maximum amplitude of a fatigue cycle with the number of cycles which a certain material tolerates before breakage with a pre-established probability. Its construction is effected by reconstructing a certain stress cycle in the laboratory with a certain amplitude which is applied to a high number of test-samples, registering the number of cycles they tolerate before breakage. Although the test-samples are subjected to the same stress, they do not all break after the same number of cycles but there is a dispersion of the results. Experience shows that this dispersion takes place according to a normal distribution. The same series of experiments is then repeated at different amplitude values and, for each distribution obtained, the average value of the number of cycles before breakage is registered.

The curve which joins all the average values at each stress amplitude is the Wohler curve at 50% probability of breakage. This means that, with respect to the samples tested, there is a 50% probability that, when subjected to a stress cycle of a certain amplitude, they will break before reaching the number of cycles delimited by the Wohler curve.

The method according to the invention then envisages a series of tests, using one or more probes 30 situated in correspondence with the combustion chamber 14, for the direct measurement in real time of the amplitude of the pressure oscillations inside the combustion chamber 14 itself. The measurements are used for determining the "cumulative stress", i.e. the amount of time which has lapsed over each significant amplitude level. The fatigue life cycle which has already passed is calculated by means of the well-known Palmgren-Miner hypothesis, considering all the amplitudes and relative consumptions of the fatigue life cycle.

When the cumulative damage D, defined below, exceeds a certain predefined value, a command is given to switch off the turbine and an inspection of the plant is effected. In this way, considering all the contributions of all the amplitudes of the fatigue cycles, a correct estimation of the residual fatigue life cycle can be obtained.

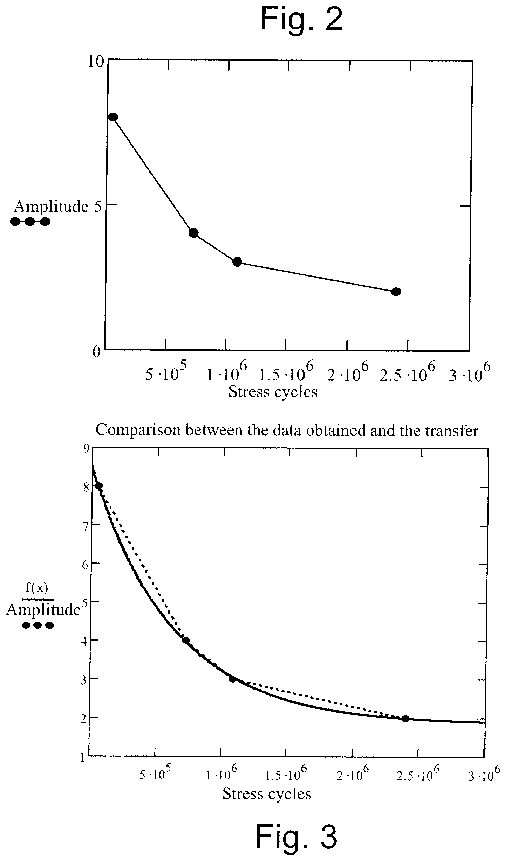

Operationally, according to an application example of the method according to the invention, the behaviour of the combustion chamber 14 is evaluated under fatigue conditions, by constructing the Wohler curve for a certain material which forms the combustion chamber 14 and for a combustion frequency of 400 Hz. Four points are identified for four different amplitude levels, from peak to peak, which allow a draft Wohler curve to be constructed (figure 2) on the basis of the following data:

|  |  |  |  |  |  |
|---|---|---|---|---|---|
|  | $10^2$min |  | 2 |  | $2.4 \times 10^6$ |
|  | 45 min |  | 3 |  | $1.08 \times 10^6$ |
| *Duration* | 30 min | *Amplitude* | 4 | *Cycles* | $7.2 \times 10^5$ |
|  | 2 min |  | 8 |  | $4.8 \times 10^4$ |

In order to measure the cumulative damage D to the combustion chamber 14 during functioning under fatigue conditions of the turbine, the Palmgren-Miner hypothesis is used, which asserts that the fraction of damage at any tension level is linearly proportional to the ratio between the number of functioning cycles and the total number of cycles which would produce the yield to that level of tension, i.e.:

$$D = \sum_{i=1}^{k} n_i / N_i$$

wherein the term *D* represents the cumulative damage, the term $N_i$ represents the residual life and derives from the Wohler curve and the term $n_i$ is measured. *k* indicates the number of amplitude levels, $N_i$ is the number of cycles necessary for reaching breakage at the i-th level of amplitude and $n_i$ is the number of cycles which have passed at the i-th level of amplitude.

The values indicated in figure 2 can be approximated with an exponential regression of the values of the cycles and amplitudes, as can be seen in the graph of figure 3, obtaining the following resulting function:

$$F(x) := 6.651 \cdot \exp(-1.583 \cdot 10^{-6} \cdot x) + 1.839$$

In order to determine the values of $N_i$, it is necessary to calculate the inverse function, i.e.:

$$y = 6.651 \cdot \exp(1.583 \cdot 10^6 \cdot x) + 1.839 \, solve, x \to (631711.93935565382186) \cdot$$

$$\ln(.1503533303262667 \ 2681 \cdot y - .27649977447000451060)$$

$$g(y) := (631711.93935565382186) . \ln(.15035333032626672681 \cdot y -$$

$$.276499774470004510 \ 60)$$

A vector is therefore created which represents the residual life, in terms of cycles, for the different amplitudes considered:

$$
Life = \begin{matrix}
g(2) \\
g(3) \\
g(4) \\
g(5) \\
g(6) \\
g(7) \\
g(8)
\end{matrix}
\qquad
Life = \begin{matrix}
2.351 \times 10^6 \\
1.103 \times 10^6 \\
7.102 \times 10^5 \\
4.699 \times 10^5 \\
2.963 \times 10^5 \\
1.602 \times 10^5 \\
4.834 \times 10^4
\end{matrix}
$$

The residual life of the combustor 14 is therefore represented by a vector containing the values of $N_i$ obtained by means of the Palmgren-Miner hypothesis. At this point, a meter measures the time which has passed between two consecutive amplitude levels $i$ and $i+1$, for example equal to pressure values of 2 psi and 3 psi. The time interval measured is then attributed to the i-th of amplitude level and is multiplied by 400 Hz to obtain the value of $n_i$ at the (i+1)-th level. By dividing $n_i$ by $N_i$ and effecting the sum, the value of the cumulative damage D is finally obtained.

A threshold value equal to 0.1 is established for the cumulative damage D. When D exceeds this threshold value, the turbine is put under diffusion flame operational conditions, i.e. a type of functioning with lower pressure oscillation levels inside the combustion chamber 14 but with greater polluting emissions. According to a preferred application example, the control software of the turbine is capable of directly using the continuous function g(y) for the calculation of the residual life, without the necessity of discretizing the residual life vector previously exposed.

It can thus be seen that the method for controlling the pressure dynamics and estimating the life cycle of the combustion chamber of a gas turbine according to the present invention achieves the objectives previously specified, as it allows a correct evaluation of the residual fatigue life of the combustion chamber to improve the performances of the turbine, allowing specific protection actions to be undertaken only when strictly necessary.

The method for controlling the pressure dynamics and estimating the life cycle of the combustion chamber of a gas turbine according to the present invention thus conceived can in any case undergo numerous modifications and variants, all included in the same inventive concept. The protection scope of the invention is therefore defined by the enclosed claims.

## Claims

1. A method for controlling the combustion in a gas turbine of the type comprising at least one compressor (10), capable of compressing air introduced therein through an inlet duct (12), at least one combustion chamber (14), where said compressed air is mixed with a gaseous fuel coming from a supply duct (16), and at least one turbine (20), capable of transforming the energy of the gas coming from said combustion chamber (14) into work energy which can be exploited for activating one or more operating machines (22), the method comprising:

   • measuring, by means of one or more probes (30) situated in correspondence with said combustion chamber (14), the amplitude of the pressure oscillations inside the combustion chamber (14) and the persistence time, defined also as cycle, of the same oscillations;
   • **characterised by** evaluating the behaviour under fatigue conditions of said combustion chamber (14), by constructing the Wohler curve from a series of tests for a certain material which forms said combustion chamber (14), for a predefined combustion frequency and for some amplitude levels of the measured pressure oscillations and determining the number of cycles associated to a 50% probability of breakage at said amplitude levels;
   • measuring the cumulative damage (D) to said combustion chamber (14) during functioning under fatigue conditions of said turbine by means of the Palmgren-Miner hypothesis, said Palmgren-Miner hypothesis being defined as :

$$D = \sum_{i=1}^{k} n_i / N_i$$

   wherein: $D$ = cumulative damage;
   $k$ = number of amplitude levels;
   $N_i$ = number of cycles necessary for reaching breakage at the i-th level of amplitude, deriving from said Wohler curve;
   $n_i$ is the number of cycles which have passed at the i-th level of amplitude;

   wherein the method further comprises the steps of
   • approximating, with an exponential regression $f(x)$, said values of the amplitude levels measured, with x being said number of cycles $N_i$;
   • calculating the inverse function $g(x)$ of said exponential regression $f(x)$ for determining said number of cycles $N_i$ as a function of the amplitude level; and
   • undertaking protection actions of said turbine if the cumulative damage value (D) measured exceeds a predefined value.

2. The method according to claim 1, wherein said undertaking protection actions comprise putting said turbine under diffusion flame operational conditions in order to reduce the pressure oscillations inside said combustion chamber (14).

## Patentansprüche

1. Verfahren zum Steuern der Verbrennung in einer Gasturbine von der Art, die umfasst: mindestens einen Verdichter (10), der in der Lage ist, ihm durch einen Einlasskanal (12) eingeführte Luft zu verdichten, mindestens eine Brennkammer (14), wo die verdichtete Luft mit einem gasförmigen Kraftstoff, der aus einem Zufuhrkanal (16) kommt, gemischt wird, und mindestens eine Turbine (20), die in der Lage ist, die Energie des Gases, das aus der Brennkammer (14) kommt, in Arbeitsenergie umzuwandeln, die zum Aktivieren einer oder mehrerer Arbeitsmaschinen (22) genutzt wird, wobei das Verfahren umfasst:

   • Messen der Amplitude der Druckschwankungen innerhalb der Brennkammer (14) und der Dauer dieser Schwankungen, die auch als Zyklus definiert werden, mittels einer oder mehrerer Sonden (30), die in Entsprechung zur Brennkammer (14) angeordnet sind;
   • **gekennzeichnet durch** Evaluieren des Verhaltens der Brennkammer (14) unter Ermüdungsbedingungen durch Konstruieren der Wöhler-Kurve aus einer Reihe von Tests für ein bestimmtes Material, aus dem die Brennkammer (14) gebildet ist, für eine vordefinierte Verbrennungsfrequenz und für einige Amplitudenhöhen der gemessenen Druckschwankungen und Bestimmen der Anzahl der Zyklen, die mit einer 50 %igen Wahrscheinlichkeit für einen Bruch bei den Amplitudenhöhen assoziiert sind;

• Messen des kumulativen Schadens (D) an der Brennkammer (14) während diese unter Ermüdungsbedingungen der Turbine arbeitet, mittels der Palmgren-Miner-Hypothese, wobei die Palmgren-Miner-Hypothese folgendermaßen definiert ist:

$$D = \sum_{i=I}^{k} n_i / N_i$$

wobei: $D$ = kumulativer Schaden;
$k$ = Anzahl der Amplitudenhöhen;
$N_i$ = Anzahl der Zyklen, die bis zum Erreichen eines Bruchs bei der i-ten Amplitudenhöhe erforderlich sind, abgeleitet von der Wöhler-Kurve;
$n_i$ die Anzahl der Zyklen ist, die bei der i-ten Amplitudenhöhe verstrichen sind;

wobei das Verfahren ferner die Schritte umfasst
• Approximieren der Werte der gemessenen Amplitudenhöhen mit einer exponentiellen Regression $f(x)$, wobei x die Anzahl der Zyklen $N_i$ ist;
• Berechnen der Umkehrfunktion $g(x)$ der exponentiellen Regression $f(x)$ zur Bestimmung der Anzahl der Zyklen $N_i$ in Abhängigkeit von der Amplitudenhöhe; und
• Ergreifen von Schutzmaßnahmen für die Turbine, falls der gemessene Schadensakkumulationswert (D) einen vordefinierten Wert überschreitet.

2. Verfahren nach Anspruch 1, wobei das Ergreifen von Schutzmaßnahmen umfasst, dass die Turbine unter Diffusionsflammen-Betriebsbedingungen gebracht wird, um die Druckschwankungen innerhalb der Brennkammer (14) zu verringern.

## Revendications

1. Procédé pour contrôler la combustion dans une turbine à gaz du type comprenant au moins un compresseur (10), capable de comprimer l'air introduit en son sein par un conduit d'entrée (12), au moins une chambre de combustion (14), où ledit air comprimé est mélangé avec un combustible gazeux provenant d'un conduit d'alimentation (16) et au moins une turbine (20), capable de transformer l'énergie du gaz provenant de ladite chambre de combustion (14) en énergie de travail, qui peut être exploitée pour activer une ou plusieurs machines exploitées (22), le procédé comprenant :

• la mesure, au moyen d'une ou plusieurs sondes (30) situées en correspondance avec ladite chambre de combustion (14), de l'amplitude des oscillations de pression à l'intérieur de la chambre de combustion (14) et du temps de persistance, défini également comme cycle, des mêmes oscillations ;
• **caractérisé par** l'évaluation du comportement dans des conditions de fatigue de ladite chambre de combustion (14), par construction de la courbe de Wohler à partir d'une série de tests pour un certain matériau qui forme ladite chambre de combustion (14), pour une fréquence de combustion prédéfinie et pour certains niveaux d'amplitude des oscillations de pression mesurées et détermination du nombre de cycles associés à une probabilité de rupture de 50 % auxdits niveaux d'amplitude ;
• la mesure de l'endommagement cumulé (D) sur ladite chambre de combustion (14) pendant le fonctionnement dans des conditions de fatigue de ladite turbine au moyen de l'hypothèse Palmgren-Miner, ladite hypothèse Palmgren-Miner étant définie comme :

$$D = \sum_{i=I}^{k} n_i / N_i$$

dans lequel : $D$ = endommagement cumulé ;
$k$ = nombre de niveaux d'amplitude ;

$N_i$ = nombre de cycles nécessaires pour atteindre la rupture au i-ème niveau d'amplitude, dérivant de ladite courbe de Wohler ;

*ni* est le nombre de cycles ayant été effectués au i-ème niveau d'amplitude ;

le procédé comprenant en outre les étapes consistant à
• approximer, avec une régression exponentielle *f(x),* lesdites valeurs des niveaux d'amplitude mesurés, x étant ledit nombre de cycles $N_i$ ;
• calculer la fonction inverse *g(x)* de ladite régression exponentielle *f(x)* pour déterminer ledit nombre de cycles $N_i$ en fonction du niveau d'amplitude ; et
• prendre des actions de protection de ladite turbine si la valeur de l'endommagement cumulé (D) mesurée dépasse une valeur prédéfinie.

2. Procédé selon la revendication 1, dans lequel ladite prise d'actions de protection comprend la mise de ladite turbine dans des conditions opérationnelles de flamme de diffusion afin de réduire les oscillations de pression à l'intérieur de ladite chambre de combustion (14).

EP 1 995 519 B1

Fig.1

16

14    30

18

10

12

Air

26

20

24

28

22

# Fig. 2

Comparison between the data obtained and the transfer

# Fig. 3

**EP 1 995 519 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004123653 A1

- US 2006266045 A1